# EUROPEAN PATENT SPECIFICATION

(11) **EP 1 666 345 B1**
(45) Date of publication and mention of the grant of the patent: **21.05.2008**
(21) Application number: 05257342.5
(22) Date of filing: 29.11.2005
(51) Int. Cl.: B62D 55/092

(54) **Crawler traveling device**
Raupenfahrzeug
Engin mobile à chenilles

(30) Priority: 01.12.2004 JP 2004348901
(43) Date of publication of application: 07.06.2006
(73) Proprietor: Komatsu Ltd, Minato-ku Tokyo 107-8414 (JP)
(72) Inventor: Kure, Kazuki c/o Komatsu Ltd., Hirakata-shi Osaka 573-1011 (JP); Ibuki, Toshio c/o Komatsu Ltd., Hirakata-shi Osaka 573-1011 (JP); Yamamoto, Teiji c/o Komatsu Ltd., Hirakata-shi Osaka 573-1011 (JP); Tamaru, Masatake c/o Komatsu Ltd, Hiratsuka-shi Kanagawa 254-8567 (JP)
(74) Representative: Haley, Stephen

(56) References cited:
- EP-A- 0 808 766
- DE-A1- 19 640 145
- PATENT ABSTRACTS OF JAPAN vol. 2003, no. 12, 5 December 2003 (2003-12-05) -& JP 2004 299664 A (KOMATSU LTD), 28 October 2004 (2004-10-28) & US 2005/040706 A1 (YAMAMOTO TEIJI ET AL) 24 February 2005 (2005-02-24)

## Description

The present invention relates to a crawler traveling device.

A crawler device according to the preamble of the independent claim is described in EP 0 808 766.

A crawler traveling device used as a drive mechanism for a working vehicle such as a bulldozer has a track frame supporting the device, an idler tumbler arranged on one side of the track frame, a driving wheel arranged adjacent to the other side of the track frame, a crawler wound on the idler tumbler and the driving wheel, and carrier rollers contacting with the crawler in an upper portion of the track frame to support and guide the crawler. With such a crawler traveling device, since the impact noise caused by engagement of the crawler with the driving wheel is high, there has been a demand for a technology for reducing the noise.

As a solution, there is a proposal for reducing the impact noise caused by the engagement of the crawler with the driving wheel (referring to, for example, Japanese laid-open utility model publication number 4-100973).

According to the art disclosed in the above document, at a position adjacent to the driving wheel on the track frame, which is located between the driving wheel and the carrier roller neighboring thereto, a supplementary carrier roller, which contacts with the crawler of this portion so as to be rolled, is provided. With such a configuration, since seesaw behavior (hereinafter referred to as waving phenomenon) caused by polygonal movement when the crawler is entangled with the driving wheel is reduced, the noise caused by the engagement of the crawler with the driving wheel can be reduced.

However, since the carrier roller is required to have a predetermined strength to endure tension change of the crawler during traveling, the outer diameter of the carrier roller needs to be larger than a predetermined value. Accordingly, in the case of providing a supplementary carrier roller at a position near the driving wheel according to the art disclosed in the above document, since the supplementary carrier roller needs to be arranged at a position separated from the driving wheel with a predetermined distance, it is difficult to reduce the bending angle of the crawler between the driving wheel and the supplementary carrier roller, therefore it is difficult to effectively reduce the noise caused by the engagement of the crawler with the driving wheel.

Further, the waving phenomenon of the crawler also occurs near the idler tumbler. Accordingly, in the case where the supplementary carrier roller is only provided near the driving wheel according to the art disclosed in the above document, since the waving phenomenon occurring near the idler tumbler can not be reduced, the noise caused by the collision between the idler tumbler and the crawler can not be reduced. As a result, it is difficult to reduce the noise caused by the crawler traveling device during traveling.

Accordingly, a configuration in which a carrier roller is also provided at a position near the idler tumbler is considered to be a solution to the problem. However, as described above, since the carrier roller having predetermined strength and therefore having relatively heavy weight needs to be used, the crawler traveling device will become heavy-weighted as a whole.

It is an object of the present invention to provide a crawler traveling device which can effectively reduce the noise during traveling without increasing the weight thereof.

A crawler traveling device according to an aspect of the present invention has a track frame constituting a frame of a drive mechanism of a vehicle body, an idler tumbler arranged on one end of the track frame, a driving wheel arranged near the other end of the track frame, a crawler including a plurality of track links endlessly connected with each other, the crawler being wound around the idler tumbler and the driving wheel, and a carrier roller that contacts with and rolls the crawler at above the track frame to support and guide the crawler, characterized in that the crawler traveling device comprises an idler tumbler moving mechanism mounted to the track frame to enable a displacement of the idler tumbler in a traveling direction relative to the track frame, and a first support guide and a second support guide, respectively arranged between the idler tumbler and the carrier roller and between the driving wheel and the carrier roller, the first and the second support guides supporting and guiding the crawler, the first support guide comprising: a first guide roller having an outer diameter smaller than the outer diameter of the carrier roller, the first guide roller being in contact with the crawler to be rolled; and a first bracket to which the first guide roller being attached on a support which rotatably supporting the idler tumbler, and the second support guide comprising: a second guide roller having an outer diameter smaller than the outer diameter of the carrier roller, the second guide roller being in contacting with the crawler to be rolled; and a second bracket rotatably attaching the second guide roller on an upper face of the track frame.

In the crawler traveling device of the present invention, the first guide roller is preferably attached by the first bracket so that an outer circumferential point of the first guide roller, at which the first guide roller contacts the crawler, is located near a tangential line connecting the idler tumbler and the carrier roller; and the second guide roller is preferably attached by the second bracket so that an outer circumferential point of the second guide roller, at which the second guide roller contacts the crawler, is located near a tangential line connecting the driving wheel and the carrier roller.

In the crawler traveling device of the present invention, the first guide roller is preferably attached by the first bracket so that an interval in the tangential line direction between the outer circumferential point of the first guide roller, at which the first guide roller contacts the crawler, and a contact point of the idler tumbler on the tangential line connecting the idler tumbler and the carrier roller is 1.5 to 2.0 times as long as a link pitch of the plurality of track links 61, and the second guide roller is preferably attached by the second bracket so that an interval in the tangential line direction between the outer circumferential point of the second guide roller, at which the second guide roller contacts the crawler, and a contact point of the driving wheel on the tangential line connecting the driving wheel and the carrier roller is 1.5 to 2.0 times as long as the link pitch .

**In the Drawings;**
Fig. 1 is a side view briefly showing the configuration of a crawler traveling device in an embodiment of the present invention;
Fig. 2 is a cross section taken along line II-II of Fig. 1;
Fig. 3 is a side view briefly showing the configuration of an idler tumbler moving mechanism;
Fig. 4 is a perspective view briefly showing the configuration of a first support guide portion;
Fig. 5 is a perspective view briefly showing the configuration of a second support guide portion; and
Fig. 6 is a side view explaining attaching positions of a first guide roller and a second guide roller.

An embodiment of the present invention will be described below with reference to the attached drawings.

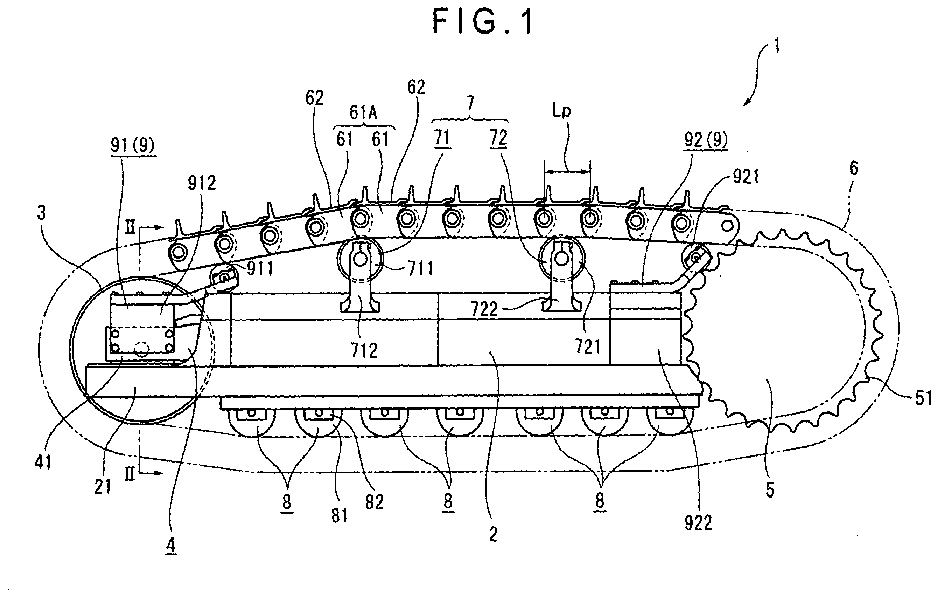

Fig. 1 is a side view briefly showing the configuration of a crawler traveling device in an embodiment of the present invention.

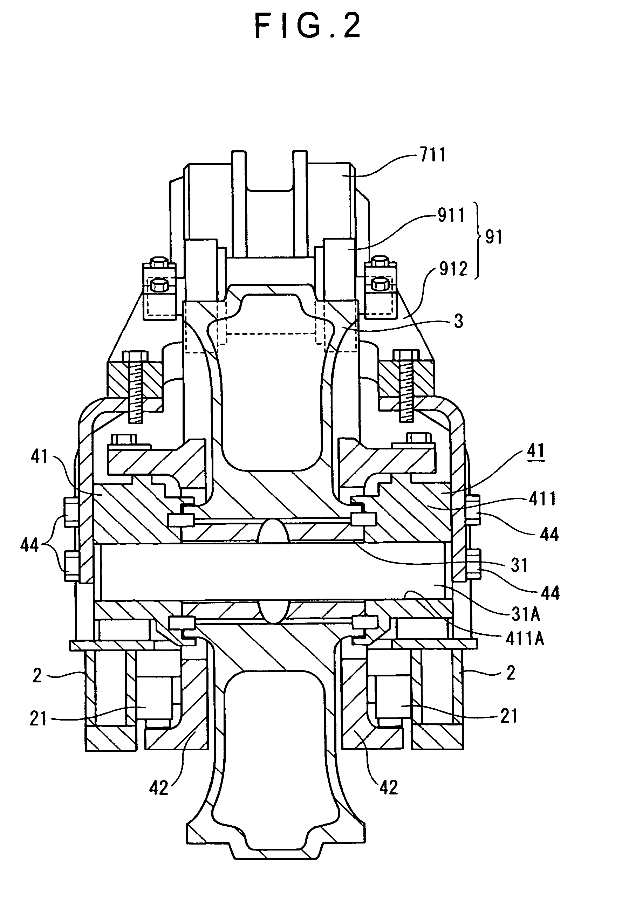

Fig. 2 is a cross section taken along line II-II of Fig. 1;

The crawler traveling device 1 is used as a drive mechanism for a vehicle body (not shown) of a working vehicle such as a bulldozer. As shown in Fig. 1, the crawler traveling device 1 includes a track frame 2, an idler 3 as an idler tumbler, an idler tumbler moving mechanism 4, a sprocket 5 as a driving wheel, a crawler 6, a carrier roller portion 7, a track roller portion 8, and a support guide portion 9.

The track frame 2, which constitutes the frame of the drive mechanism for the vehicle body (not shown), is arranged on both sides of the vehicle body and is formed as a casing extending in the back-and-forth direction as shown in Fig. 1. As shown in Fig. 1 or Fig. 2, formed on the front side of the track frame 2 is a guide 21, which projects toward both sides of the idler 3 and engages with both a yoke and a yoke moving guide (both being described later) of the idler tumbler moving mechanism 4.

As shown in Fig. 1, the idler 3 is arranged on the front side of the track frame 2 and is rotatably supported by the idler tumbler moving mechanism 4. As shown in Fig. 2, the idler 3 has a cylindrical shape having a hollow space therein, and has a shaft inserting portion 31 at a central part thereof, into which a shaft 31 A is inserted in the axial direction. Further, as shown in Fig. 2, the idler 3 is formed in such a manner that the diameter of the substantially center portion of the circumference in the width direction is expanded relative to the diameter of the both side portions. A pair of the below-mentioned track links, which constitute the crawler 6 (Fig. 1), come into contact with the both side portions of the idler 3 so as to rotate the idler 3.

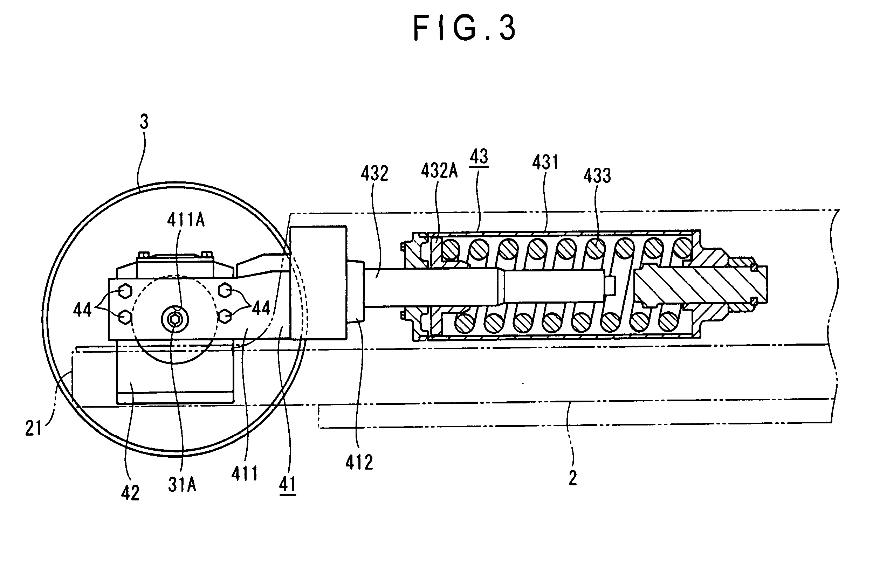

Fig. 3 is a side view briefly showing the configuration of the idler tumbler moving mechanism.

The idler tumbler moving mechanism 4 not only rotatably supports the idler 3, but also makes the idler 3 movable relative to the track frame 2 in the back-and-forth direction. The idler tumbler moving mechanism 4 includes, as shown in Fig. 2 or 3, a yoke 41 as a support portion, a yoke moving guide 42, and a tension regulating cylinder 43 (see Fig. 3).

The yoke 41 is arranged in the front side of the idler tumbler moving mechanism 4, the yoke 41 rotatably supporting the idler 3 and transmitting the extension/contraction motion of the tension regulating cylinder 43 to the idler 3. The yoke 41 includes, as shown in Fig. 3, an arm 411 and a connecting portion 412.

Though not shown in the drawings, the arm 411 has such a shape that the tip end side thereof is branched to the right and the left to extend in parallel with each other so as to sandwich the both faces of the idler 3.

As shown in Fig. 2 or 3, tip end sides of the arm 411 are respectively formed with a circular hole 411A where the both end portions of the shaft 31A are respectively press-fitted. The arm 411 supports the idler 3 in such a manner that the idler 3 is rotatable around the shaft 31A.

The connecting portion 412 connects to the base end side of the arm 411, so that the arm 411 is connected to the below-mentioned rod of the tension regulating cylinder 43. The connecting portion 412 transmits the extension/contraction motion of the tension regulating cylinder 43 to the arm 411.

The yoke moving guide 42 guides the movement of the yoke 41 in the back-and-forth direction caused by the extension/contraction motion of the tension regulating cylinder 43. As shown in Fig. 2 or 3, the yoke moving guide 42 is arranged between the idler 3 and the yoke 41, and is fixed to the yoke 41 with four bolts 44. As shown in Fig. 3, the yoke moving guide 42 is made of a plate-like body substantially U-shaped in cross section and having a height larger than the height of the yoke 41, the yoke 41 being arranged on the inner side of the U-shaped yoke moving guide 42. A guide 21 of the track frame 2 is arranged in a gap defined by a lower end portion of the yoke 41 and a lower end portion of the yoke moving guide 42 so as to be engaged respectively with the yoke 41 and the yoke moving guide 42, and, due to the extension/contraction motion of the tension regulating cylinder 43, the yoke 41 and the yoke moving guide 42 slide along the guide 21.

The tension regulating cylinder 43 is arranged inside the track frame 2, the tension regulating cylinder 43 regulating the tension of the crawler 6 by moving the idler 3 back and forth through the yoke 41. The tension regulating cylinder 43 includes, as shown in Fig. 3, a hollow portion 431, a rod 432, and a compression spring 433.

As shown in Fig. 2, the hollow portion 431 is fixed to the inner wall of the track frame 2, the hollow portion 431 housing the compression spring 433 and a portion of the rod 432 thereinside.

As shown in Fig.3, the rod 432 is a substantially bar-like member extending in the back-and-forth direction, and is formed with a pressure receiving portion 432A at a position on the tip end side relative to the center portion for receiving the pressure of the compression spring 433, the pressure receiving portion 432A being formed by expanding the diameter thereof. The rod 432 has the base end side thereof and the pressure receiving portion 432A thereof inserted into the hollow portion 431 and the tip end side thereof projected toward the yoke 41 so as to be connected with the connecting portion 412.

The compression spring 433 is a coil spring arranged around the base end side of the rod 432, one end of the compression spring 433 being fixed to the inner wall of the hollow portion 431, the other end being fixed to the pressure receiving portion 432A of the rod 432. The compression spring 433 constantly pushes the rod 432 forward through the pressure receiving portion 432A.

In the idler tumbler moving mechanism 4, when tension of the crawler 6 is, for example, increased corresponding to the shape of the grounding surface during traveling of the crawler traveling device 1, an acting force for pushing the rod 432 backward through the yoke 41 is generated, and the rod 432 is moved to a position where the acting force and the compression force of the compression spring 433 balance, so that the idler 3 is moved accordingly in the back-and-forth direction through the yoke 41. With such a configuration, when the tension of the crawler 6 is increased, the distance between the idler 3 and the sprocket 5 becomes small, so that the impact force transmitted to the crawler traveling device 1 can be reduced.

The sprocket 5 is rotatably arranged adjacent to the rear side of the track frame 2, and is rotated by a hydraulic motor (not shown) or the like. As shown in Fig. 1, the sprocket 5 has a substantially cylindrical shape similar to the idler 3, and is formed, on the outer circumference portion thereof, with sprocket teeth 51 which engage with the crawler 6 at a link pitch Lp of the below-mentioned track links of the crawler 6. When the sprocket 5 is driven to rotate, the sprocket teeth 51 are engaged with the crawler 6, so that the crawler 6 is urged to perform revolving motion.

The crawler 6 is wound on the idler 3 and the sprocket 5 to perform revolving motion driven by the sprocket 5 so as to make the crawler traveling device 1 travel. The crawler 6 includes, as shown in Fig. 1, a pair of track links 61 and shoes 62.

The pair of track links 61, each having substantially rectangular parallelepiped-shape extending in the traveling direction (the right-and-left direction in Fig. 1), are arranged opposing to each other in the width direction (orthogonal to the paper in Fig. 1) perpendicular to the traveling direction of the crawler 6. As shown in Fig. 1, the pair of track links 61 is connected to another pair of track links 61 adjacent in the traveling direction with a bushing and a connection pin (each not shown) in a bendable manner. By connecting pairs of track links 61 adjacent in the traveling direction, an endless track chain 61A is formed. By engaging the connection portions (the bushings and the connection pins), which connect a pair of the track links 61 to another pair of track links 61, with the sprocket teeth 51 of the sprocket 5, the crawler 6 performs revolving motion due to the rotation of the sprocket 5.

The shoes 62 are fixed on the ground side of each pair of track links 61 of the track chain 61A by bolts (not shown), the shoes 62 contacting the ground when the crawler traveling device 1 travels.

As shown in Fig. 1, the carrier roller portion 7 contacts with the track chain 61A in the upper portion of the track frame 2 so as to be rolled to support and guide the crawler 6. As shown in Fig. 1, the carrier roller portion 7 includes a first carrier roller portion 71 and a second carrier roller portion 72, both being separated from each other by a predetermined distance. As shown in Fig. 1, the carrier roller portions 71 and 72 include carrier rollers 711 and 721, which are substantially cylindrical and rotatable, and carrier roller supporting members 712 and 722, which rotatably supports the carrier rollers 711 and 721 attached on the upper face of the track frame 2, the carrier rollers 711 and 721 contacting with the track link 61 of the track chain 61 A to support and guide the crawler 6.

As shown in Fig. 1, the track roller portion 8 includes, similar to the carrier roller portions 71 and 72, a track roller 81, which is substantially cylindrical and rotatable, and a track roller supporting member 82 fixed on the lower face of the track frame 2 and rotatably supporting the track roller 81. As shown in Fig. 1, a plurality (seven in the present embodiment) of the track roller portions 8 are arranged in a manner separated from each other by a predetermined distance. The track roller portions 8 dispersively transmit the weight of the vehicle body to the crawler 6.

The support guides 9 are respectively arranged in the vicinity of the idler 3 and the sprocket 5, the support guide 9 contacting with the track chain 61A so as to be rolled to support and guide the crawler 6. The support guide 9 includes a first support guide 91 and a second support guide 92.

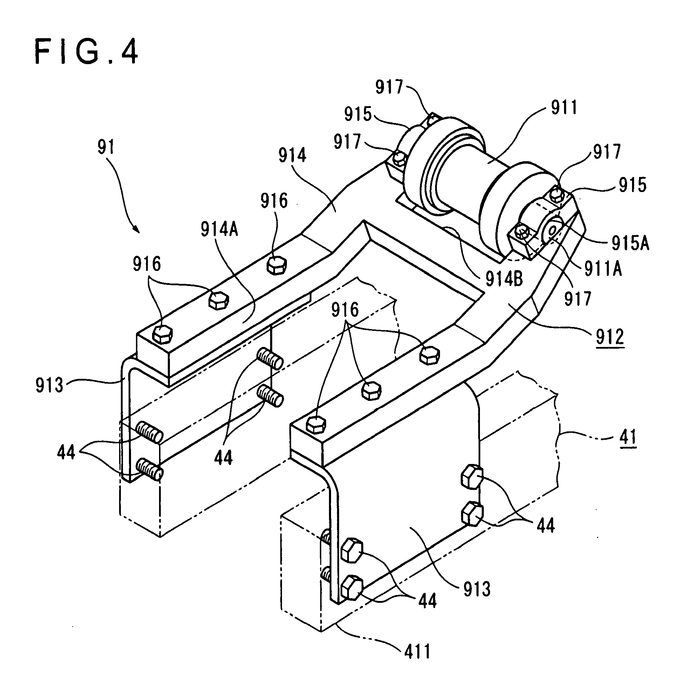

Fig. 4 is a side view briefly showing the configuration of the first support guide 91.

As shown in Fig. 1, the first support guide 91 is arranged between the idler 3 and the carrier roller 711. As shown in Fig. 4, the first support guide 91 includes a first guide roller 911 and a first bracket 912.

The first bracket 912 is for attaching the first guide roller 911 to the arm 411 of the yoke 41 of the idler tumbler moving mechanism 4. As shown in Fig. 4, the first bracket 912 includes a pair of connecting portions 913, a roller supporter 914, and a pair of bearing portions 915.

As shown in Fig. 4, each of the pair of connecting portions 913 is made of a plate substantially L-shaped in plan view, the vertical portion of the L-shape being situated on the outer side of the arm 411 of the yoke 41, the horizontal portion of the L-shape being situated on the upper side of the arm 411. As shown in Fig. 4, the vertical portion of each of the L-shaped connecting portions 913 is fixed to the arm 411 by the four bolts 44 which connect the arm 411 of the yoke 41 to the yoke moving guide 42.

The roller supporter 914 is a member for supporting the first guide roller 911 and the pair of bearing portions 915. As shown in Fig. 4, the roller supporter 914 is made of a plate substantially H-shaped in plan view and is formed with cutouts 914A and 914B respectively in approximate width central portion of the base end and in approximate width central portion of the tip end. As shown in Fig. 4, the base end side of the roller supporter 914 is fixed to the horizontal portion of the L-shaped connecting portions 913 with six bolts 916.

As shown in Fig. 4, the tip end side of the roller supporter 914 is bent toward the upper side so as to form a predetermined angle relative to the base end side that is horizontally situated.

Though not shown in the drawings, the upper face of the tip end side of the roller supporter 914 is formed with recessed portions corresponding to the shape of the shaft 911A inserted into the first guide roller 911, two end portions of the shaft 911 A are fitted into the recessed portions.

As shown in Fig. 4, each of the pair of bearing portions 915 has substantially rectangular parallelepiped-shape and is formed, on the lower face thereof, with a recessed portion 915A corresponding to the shape of the shaft 911A. each of the bearing portions 915 being fixed to the upper face of the tip end side of the roller supporter 914 with two bolts 917. The pair of bearing portions 915 press and fix, through the recessed portions 915A, the shaft 911A fitted into the recessed portions of the roller supporter 914 to the side of the roller supporter 914. The roller supporter 914 and the pair of the bearing portions 915 not only fix the shaft 911A, but also support the first guide roller 911 in such a manner that the first guide roller 911 is rotatable around the shaft 911A.

As shown in Fig. 4, the first guide roller 911 is rotatable around the shaft 911 A supported by the roller supporter 914 and the pair of bearing portion 915, the first guide roller 911 contacting with the track chain 61 A so as to be rolled to support and guide the crawler 6. As shown in Fig. 4, the first guide roller 911 has a substantially cylindrical shape with the diameter of two end portions thereof being expanded, the two end portions contacting with the pair of track links 61 of the track chain 61A so as to be rolled. As shown in Fig. 1, the first guide roller 911 has an outer diameter smaller than that of the carrier rollers 711 and 712 of the carrier roller portion 7.

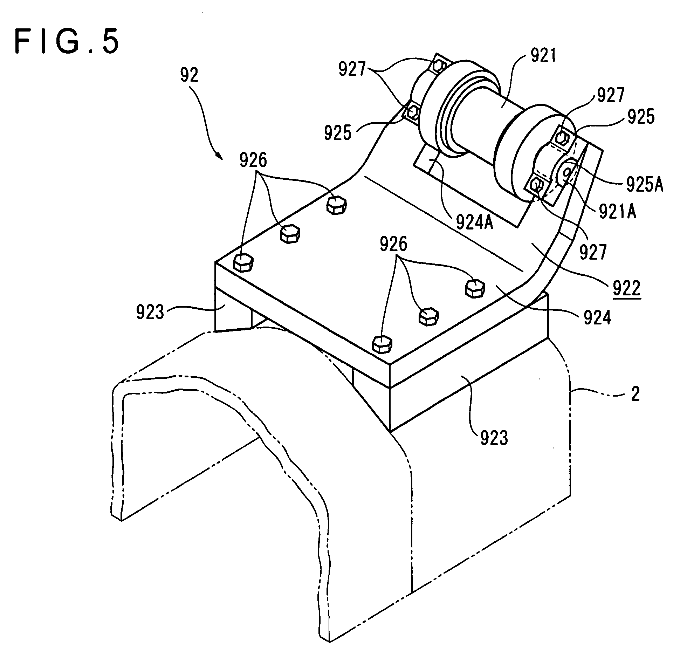

Fig. 5 is a side view briefly showing the configuration of the second support guide 92.

As shown in Fig. 1, the second support guide 92 is arranged between the carrier roller 721 and the sprocket 5. As shown in Fig. 5, the second support guide 92 includes a second guide roller 921 and a second bracket 922.

The second bracket 922 is a member for attaching the second guide roller 921 to the upper face of the track frame 2. As shown in Fig. 5, the second bracket 922 includes a pair of connecting portions 923, a roller supporter 924, and a pair of bearing portions 925.

As shown in Fig. 5, the pair of connecting portions 923 are arranged on the upper face of the track frame 2 in a manner opposing to each other in the width direction. As shown in Fig. 5, each of the pair of the connecting portions 923 has a substantially rectangular parallelepiped shape, of which the lower face has a slope in accordance with the sloped shape of the upper face of the track frame 2 and the upper face becomes horizontal when being fixed on the upper face of the track frame 2.

The roller supporter 924 is a member for supporting the second guide roller 921 and the pair of bearing portions 925. As shown in Fig. 5, the roller supporter 924 is made of a plate formed with a cutout 924A in approximate width central portion of the tip end side. As shown in Fig. 5, the base end side of the roller supporter 924 is fixed to the upper faces of the pair of connecting portions 923 with six bolts 926.

As shown in Fig. 5, similar to the roller supporter 914 of the first support guide 91, the tip end side of the roller supporter 924 is bent toward the upper side so as to form a predetermined angle relative to the base end side that is horizontally situated. Though not shown in the drawings, similar to the roller supporter 914 of the first support guide 91, the upper face of the tip end side of the roller supporter 924 is formed with recessed portions corresponding to the shape of the shaft 921 A inserted into the second guide roller 921, two end portions of the shaft 921 A are fitted into the recessed portions.

As shown in Fig. 5, each of the pair of bearing portions 925 is fixed to the upper face of the tip end side of the roller supporter 924 with two bolts 927 so that the shaft 921 A is fixed between the bearing portion 925 and the roller supporter 924. Similar to the pair of the bearing portions 915 of the first support guide 91, each of the pair of the bearing portions 925 has substantially rectangular parallelepiped-shape and is formed, on the lower face thereof, with a recessed portion 925A corresponding to the shape of the shaft 921 A. Similar to the first support guide 91, the roller supporter 924 and the pair of bearing portions 925 not only fix the shaft 921A, but also support the second guide roller 921 in such a manner that the second guide roller 921 is rotatable around the shaft 921A.

As shown in Fig. 5, the second guide roller 921 is rotatable around the shaft 921 A supported by the roller supporter 924 and the pair of bearing portions 925, the second guide roller 921 contacting with the track chain 61 A so as to be rolled. The second guide roller 921 has the same shape as that of the first guide roller 911.

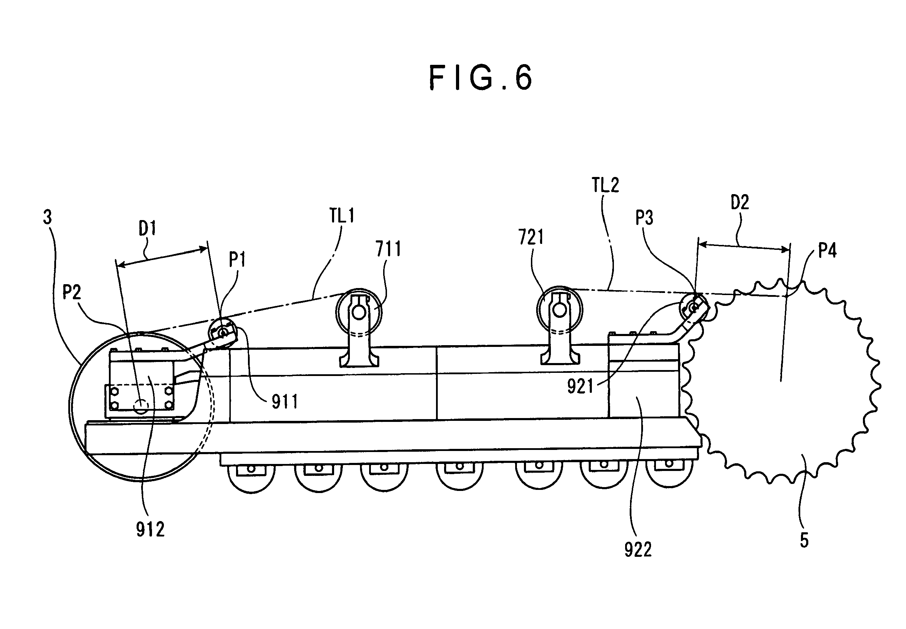

Fig. 6 is a side view explaining the attaching positions of the first guide roller 911 and the second guide roller 921.

As shown in Fig. 6, the first guide roller 911 is attached by the first bracket 912 so that, in the normal state (the state in which the idler 3 is not moved to the side of the sprocket 5 by the idler tumbler moving mechanism 4), a point P1 on the outer circumference of the first guide roller 911, at which the first guide roller 911 contacts the track chain 61A, is positioned on a tangential line TL1 connecting the idler 3 and the carrier roller 711. Further, the first guide roller 911 is attached by the first bracket 912 so that the interval D1 in the tangential line (TL1) direction between the contact point P2 of the idler 3 on the tangential line TL1 and the point P1 on the outer circumference of the first guide roller 911 becomes 1.5 to 2.0 times as long as the link pitch Lp of the track link 61 (see Fig. 1).

Similarly, as shown in Fig. 6, the second guide roller 921 is attached by the second bracket 922 so that a point P3 on the outer circumference of the second guide roller 921, at which the second guide roller 921 contacts the track chain 61 A, is positioned on a tangential line (TL2) connecting the sprocket 5 and the carrier roller 721. Further, the second guide roller 921 is attached by the second bracket 922 so that the interval D2 in the tangential line (TL2) direction between the contact point P4 of the sprocket 5 on the tangential line TL2 and the point P3 on the outer circumference of the second guide roller 921 becomes 1.5 to 2.0 times as long as the link pitch Lp (see Fig. 1).

In the present embodiment, since the outer diameters of the first guide roller 911 of the first support guide 91 and the second guide roller 921 of the second support guide 92 are smaller than the those of the carrier rollers 711 and 721, the first guide roller 911 and the second guide roller 921 can respectively be arranged near the idler 3 and sprocket 5. Accordingly, it is possible to reduce the bending angles between adjacent track links 61 and 61 of the crawler 6 between the idler 3 and the first guide roller 911 and between the sprocket 5 and the second guide roller 921, so that the sound caused by the collision between the crawler 6 and the idler 3 and between the crawler 6 and the sprocket 5 can be effectively reduced.

If the intervals D1 and D2 are set to be, for example, larger than 2 times as long as the link pitch Lp, the waving phenomenon of the crawler 6 between the idler 3 and the first guide roller 911 and between the sprocket 5 and the second guide roller 921 can not be restrained, therefore it is difficult to effectively reduce the noise. Also, if the intervals D1 and D2 are set to be, for example, smaller than 1.5 times as long as the link pitch Lp, since the first guide roller 911 and the second guide roller 921 have to be unnecessarily minimized, it will be difficult to maintain the predetermined strength of the first guide roller 911 and the second guide roller 921.

In the present embodiment, since the intervals D1 and D2 are set to be 1.5 to 2 times as long as the link pitch Lp, the bending angles of the crawler 6 between the idler 3 and the first guide roller 911 and between the sprocket 5 and the second guide roller 921 can be reduced and therefore the waving phenomenon of the crawler 6 can be restrained, so that the noise generated near the idler 3 and the sprocket 5 can be effectively reduced. Further, since the first guide roller 911 and the second guide roller 921 need not to be unnecessarily downsized, the predetermined strength of the first guide roller 911 and the second guide roller 921 can be maintained, and the deterioration and the damage of the first guide roller 911 and the second guide roller 921 can be avoided.

Further, since the first guide roller 911 is positioned near the idler 3 and the second guide roller 921 is positioned near the sprocket 5, not only the waving phenomenon generated near the sprocket 5 but also the waving phenomenon generated near the idler 3 can be restrained. Accordingly, the noise generated near both the idler 3 and the sprocket 5 can be restrained, and, as a result, the noise of the crawler traveling device 1 generated during traveling can be dramatically reduced.

However, in the case that the first guide roller 911 is attached to the track frame 2, even when the first guide roller 911 is set to the position where it does not receive the force caused by the tension change of the crawler 6 during traveling, since the first guide roller 911 does not move together with the idler 3 when the idler 3 is moved by the idler tumbler moving mechanism 4 toward the traveling direction, the position of the first guide roller 911 will be changed to the position where it receives the force caused by the tension change of the crawler 6 during traveling. To cope with such a case, the strength of the first guide roller 911 needs to be improved.

In the present embodiment, since the first guide roller 911 is attached to the yoke 41, which rotatably supports the idler 3, by the first bracket 912, the first guide roller 911 can be moved following the movement of the idler 3. Accordingly, in the case where the first guide roller 911 is set to the position where it does not receive the force caused by the tension change of the crawler 6 during traveling, even when the idler 3 is moved by the idler tumbler moving mechanism 4 in the traveling direction, since the since the first guide roller 911 moves together with the idler 3, the first guide roller 911 is approximately constantly set to the position where it does not receive the force caused by the tension change of the crawler 6 during traveling. Accordingly, the strength of the first guide roller 911 is not highly required compared with the case where the first guide roller 911 is attached to the track frame 2. In other words, the first guide roller 911 can be reduced in size and weight. As a result, the weight of the crawler traveling device 1 needs not to be increased.

Since the point P1 on the outer circumference of the first guide roller 911 is positioned on the tangential line TL1 connecting the idler 3 and the carrier roller 711, the first guide roller 911 can be set to the position where it does not receive the force caused by the tension change of the crawler during traveling. Further, since the point P3 on the outer circumference of the second guide roller 921 is positioned on the tangential line TL2 connecting the sprocket 5 and the carrier roller 721, the second guide roller 921 can be set to the position where it does not receive the force caused by the tension change of the crawler 6 during traveling. Accordingly, the strength of both the first guide roller 911 and the second guide roller 921 is not highly required. In other words, the first guide roller 911 and the second guide roller 921 can be reduced in size and weight, so that the weight of the crawler traveling device 1 can be reduced.

Incidentally, the present invention is not intended to be limited to the above embodiment but can include other configurations, such as the following modifications, as long as the objects of the present invention can be achieved.

In the above embodiment, though the carrier roller portion 7 is constituted of the first carrier roller portion 71 and the second carrier roller portion 72, the carrier roller portion 7 also can be constituted of one, three, or more than three carrier roller portions. In this case, the first support guide 91 can also be arranged between the idler 3 and the carrier roller at a side close to the idler 3. Further, the second support guide 92 can be arranged between the sprocket 5 and the carrier roller at a side close to sprocket 5.

In the above embodiment, though the first guide roller 911 is attached to the yoke 41 by the first bracket 912, the first guide roller 911 can also be attached to other member as long as the member can move together with the idler 3 in the traveling direction.

Also, though the preferred configurations, methods and the like for carrying out the present invention are described above, the present invention is not intended to be limited thereto. In other words, though the present invention is mainly illustrated and described based on specific embodiment thereof, it should be understood that various changes in the shape, quantity, and other details of construction can be made by those skilled in the art based on the embodiment described above without departing from the objects of technical characteristics of the present invention as defined by the appended claims.

Accordingly, the description disclosed above, which gives specific shape, quantity and the like, is just an exemplary description to make the present invention well understood instead of being a definition of the limits of the invention, therefore the description based on a component name without part or all of the specific shape, quantity and the like is included in the present invention.

### [Example]

Advantages of the present invention will be described below based on concrete examples as below.

### [Example 1]

In the Example 1, the crawler traveling device was manufactured under the condition that, in the above embodiment, the interval D1 between the point P1 on the outer circumference of the first guide roller 911 and the contact point P2 of the idler 3 and the interval D2 between the point P3 on the outer circumference of the second guide roller 921 and the contact point P4 of the sprocket 5 are set as below.

| | |
|---|---|
| Interval D1: | 2Lp (which means that the interval D1 was set to be two times |

as long as the link pitch Lp of the track link 61; note that "n times as long as the link pitch Lp" will be hereinafter referred to as "nLp")

| | |
|---|---|
| Interval D2: | 2Lp |

### [Example 2]

In the Example 2, the crawler traveling device was manufactured under the condition identical to the Example 1 except that the interval D1 and the interval D2 were changed as below.

| | |
|---|---|
| Interval D1: | 1.5Lp |
| Interval D2: | 2.0Lp |

### [Example 3]

In the Example 3, the crawler traveling device was manufactured under the condition identical to the Example 1 except that the interval D1 and the interval D2 were changed as below.

| | |
|---|---|
| Interval D1: | 2.5Lp |
| Interval D2: | 2.5Lp |

### [Example 4]

In the Example 4, the crawler traveling device was manufactured under the condition identical to the above embodiment except that the position of the first guide roller 911 and the position of the second guide roller 921 were set as below.

First, the first guide roller 911 was set to a position 16 mm above the tangential line TL1.

Further, the second guide roller 921 was set to a position 6 mm above the tangential line TL2.

Further, under the condition set above, the interval between the contact point of the idler 3 and the contact point of the first guide roller 911 on the tangential line connecting the idler 3 and the first guide roller 911 was set to 2.0Lp.

Furthermore, under the condition set above, the interval between the contact point of the sprocket 5 and the contact point of the second guide roller 921 on the tangential line connecting the sprocket 5 and the second guide roller 921 was set to 2.0Lp.

### [Comparative Example 1]

In the Comparative Example 1, the crawler traveling device was manufactured under the condition that, in the above embodiment, the first support guide 91 and the second support guide 92 were not mounted. The rest of the configuration was identical to that of the Example 1. [Comparative Example 2]

In the Comparative Example 2, the crawler traveling device was manufactured under the condition that, in the above Example 4, the second support guide 92 was not mounted. The rest of the configuration was identical to that of the Example 4.

The crawler traveling device manufactured under the conditions shown as in the above Examples 1 to 4 and the Comparative Examples 1 and 2 were respectively mounted to a vehicle body (engine: SA6D125E made by Komatsu Ltd.; cooling fun: a steel fun having diameter of 1060 mm made by Komatsu Ltd.), and a surrounding noise (a dynamic noise) and an adjacent noise were measured with a noise meter (LA-5110 made by Ono Sokki Co, Ltd.) under the traveling condition of: the engine speed of 2060 rpm and cooling fun speed of 745 rpm (forward first speed F1: 3.6 km/h; reverse first speed R1: 4.7 km/h). Incidentally, the adjacent noise was measured respectively at a position 150 mm horizontally separated from the idler 3 and a position 150mm horizontally separated from the sprocket 5.

The evaluated results of the above Examples 1 to 4 and the Comparative Examples 1 and 2 are shown in the below table 1.

**[Table 1]**

| | Dynamic Noise (dB) *(figures in brackets denote sound field correction values)* *(figures on lower rows denote forward first speed F1 and reverse first speed R1)* | | Adjacent Noise (dB) | | | |
|---|---|---|---|---|---|---|
| | | | Idler Side | | Sprocket Side | |
| | | | Forward First Speed F1 | Reverse First Speed R1 | Forward First Speed F1 | Reverse First Speed R1 |
| Example 1 | 108.6 (-1.3) | | 101.8 | 101.1 | 97.1 | 106.8 |
| | F1: 107.1 | R1: 110.0 | | | | |
| Example 2 | 108.8 (-1.5) | | 103.2 | 102.6 | 97.9 | 107.3 |
| | F1: 107.4 | R1:110.2 | | | | |
| Example 3 | 109.2 (-1.4) | | 103.8 | 102.5 | 98.7 | 109.3 |
| | F1: 107.6 | R1:110.7 | | | | |
| Example 4 | 108.8 (-1.4) | | 101.7 | 101.3 | 97.8 | 108.3 |
| | F1: 107.0 | R1:110.3 | | | | |
| Comparative Example 1 | 110.1 (-1.4) | | 103.5 | 104.0 | 98.8 | 109.6 |
| | F1: 107.7 | R1: 112.0 | | | | |
| Comparative Example 2 | 110.4 (-0.9) | | 102.1 | 103.4 | 98.3 | 110.6 |
| | F1:107.7 | R1:112.4 | | | | |

As the result, as shown in Table 1, the Comparative Example 1 showed high dynamic noise value and high adjacent noise. Also, as shown in Table 1, in the Comparative Example 2, though the adjacent noise on the side of the idler was lowered, the adjacent noise on the side of the sprocket failed to be lowered, so that the dynamic noise showed substantially the same result as the Comparative Example 1.

On the other hand, it was confirmed that, compared to the Comparative Examples 1 and 2, the Examples 1 to 4 have noise reducing effect both in the dynamic noise and in the adjacent noise.

Specifically, among the Examples 1 to 3, the Examples 1 and 2 had lower dynamic noise value and lower adjacent noise compared to the Example 3, so that it was confirmed that the noise can be further reduced by setting the interval D1 and the interval D2 to 1.5Lp to 2.0Lp. Particularly, the Example 1 had noise reducing effect, so that it was confirmed that the optimal value for both the interval D1 and the interval D2 was 2.0Lp.

Further, between the Example 1 and the Example 4, the Example 1 showed lower value both in the dynamic noise and in the adjacent noise compared to the Example 4, so that it was confirmed that the noise can be most reduced by setting the point P1 on the outer circumference of the first guide roller 911 and the point P3 on the outer circumference of the second guide roller 921 respectively on the tangential line TL1 and the tangential line TL2.

## Claims

1. A crawler traveling device (1) comprising:
a track frame (2) constituting a frame of a drive mechanism of a vehicle body;
an idler tumbler (3) arranged on one end of the track frame (2);
a driving wheel (5) arranged adjacent to the other end of the track frame (2);
a crawler (6) including a plurality of track links (61) endlessly connected with each other, the crawler being wound around the idler tumbler (3) and the driving wheel (5); and
a carrier roller (711, 721) contacting with and rolling the crawler (6) at above the track frame (2) to support and guide the crawler (6),
whereby
the crawler traveling device comprises an idler tumbler moving mechanism (4) mounted to the track frame (2) to enable a displacement of the idler tumbler (3) in a traveling direction relative to the track frame (2),
**characterized in that** the crawler traveling device (1) further comprises a first support guide (91) and a second support guide (92), respectively arranged between the idler tumbler (3) and the carrier roller (711) and between the driving wheel (5) and the carrier roller (721), the first and the second support guides supporting and guiding the crawler (6),
the first support guide (91) comprising: a first guide roller (911) having an outer diameter smaller than the outer diameter of the carrier roller (711, 721), the first guide roller (911) being in contact with the crawler (6) to be rolled; and a first bracket (912) to which the first guide roller (911) being attached on a support (41) which rotatably supporting the idler tumbler (3),
the second support guide (92) comprising: a second guide roller (921) having an outer diameter smaller than the outer diameter of the carrier roller (711, 721), the second guide roller (921) being in contacting with the crawler (6) to be rolled; and a second bracket (922) rotatably attaching the second guide roller (921) on an upper face of the track frame (2).

2. The crawler traveling device (1) according to claim 1,
wherein the first guide roller (911) is attached by the first bracket (912) so that an outer circumferential point (P1) of the first guide roller (911), at which the first guide roller (911) contacts the crawler (6), is located near a tangential line (TL1) connecting the idler tumbler (3) and the carrier roller (711), and
wherein the second guide roller (921) is attached by the second bracket (922) so that an outer circumferential point (P3) of the second guide roller (921), at which the second guide roller (921) contacts the crawler (6), is located near a tangential line (TL2) connecting the driving wheel (5) and the carrier roller (721).

3. The crawler traveling device (1) according to claim 1 or 2,
wherein the first guide roller (911) is attached by the first bracket (912) so that an interval (D1) in the tangential line (TL1) direction between the outer circumferential point (P1) of the first guide roller (911), at which the first guide roller (911) contacts the crawler (6), and a contact point (P2) of the idler tumbler (3) on the tangential line (TL1) connecting the idler tumbler (3) and the carrier roller (711) is 1.5 to 2.0 times as long as a link pitch (Lp) of the plurality of track links 61, and
wherein the second guide roller (921) is attached by the second bracket (922) so that an interval (D2) in the tangential line (TL2) direction between the outer circumferential point (P3) of the second guide roller (921), at which the second guide roller (921) contacts the crawler (6), and a contact point (P4) of the driving wheel (5) on the tangential line (TL2) connecting the driving wheel (5) and the carrier roller (721) is 1.5 to 2.0 times as long as the link pitch (Lp).

## Patentansprüche

1. Raupenkettenvorrichtung (1), umfassend:
einen Kettenrahmen (2), der einen Rahmen eines Antriebsmechanismus für einen Fahrzeugaufbau bildet;
einen Leerlauf-Kettenstern (3), der an einem Ende des Kettenrahmens (2) angeordnet ist;
ein Treibrad (5), das benachbart zum anderen Ende des Kettenrahmens (2) angeordnet ist;
eine Raupenkette (6), die eine Vielzahl von Kettenglieder (61) umfasst, die endlos miteinander verbunden sind, wobei die Raupenkette um den Leerlauf-Kettenstern (3) und das Treibrad (5) gewunden ist; und
eine Tragrolle (711, 721), die die Raupenkette oberhalb des Kettenrahmens (2) kontaktiert und abrollt, um die Raupenkette (6) abzustützen und zu führen,
wobei die Raupenkettenvorrichtung einen Leerlauf-Kettenstern-Bewegungsmechanismus (4) aufweist, der am Kettenrahmen (2) montiert ist, um eine Verschiebung des Leerlauf-Kettensterns (3) in einer Fahrtrichtung relativ zum Kettenrahmen zu ermöglichen,
**dadurch gekennzeichnet, dass** die Raupenkettenvorrichtung ferner umfasst:
eine erste Führungsabstützung (91) und eine zweite Führungsabstützung (92), die je zwischen dem Leerlauf-Kettenstern (3) und der Tragrolle (711) und zwischen dem Treibrad (5) und der Tragrolle (721) angeordnet sind, wobei die ersten und zweiten Führungsabstützungen die Raupenkette (6) abstützen und führen,
wobei die erste Führungsabstützung (91) aufweist: eine erste Führungsrolle (911) mit einem Außendurchmesser, der kleiner als der Außendurchmesser der Tragrolle (711, 721) ist, wobei die erste Führungsrolle (911) in Kontakt mit der abzurollenden Raupenkette (6) steht; und einen ersten Bügel (912), an dem die erste Führungsrolle (911) an einer Halterung (41) befestigt ist, die den Leerlauf-Kettenstern (3) drehbar abstützt, und
wobei die zweite Führungsabstützung (92) aufweist: eine zweite Führungsrolle (921) mit einem Außendurchmesser, der kleiner als der Außendurchmesser der Tragrolle (711, 721) ist, wobei die zweite Führungsrolle (921) in Kontakt mit der abzurollenden Raupenkette (6) steht; und einen zweiten Bügel (922), der die zweite Führungsrolle (921) auf einer Oberseite des Kettenrahmens (2) drehbar befestigt.

2. Raupenkettenvorrichtung (1) nach Anspruch 1,
wobei die erste Führungsrolle (911) durch den ersten Bügel (912) so befestigt ist, dass ein Außenumfangspunkt (P1) der ersten Führungsrolle (911), an dem die erste Führungsrolle (911) die Raupenkette (6) kontaktiert, in der Nähe einer tangentialen Linie (TL1) liegt, die den Leerlauf-Kettenstern (3) und die Führungsrolle (711) verbindet, und
wobei die zweite Führungsrolle (921) durch den zweiten Bügel (922) so befestigt ist, dass ein Außenumfangspunkt (P3) der zweiten Führungsrolle (921), an dem die zweite Führungsrolle (921) die Raupenkette (6) kontaktiert, in der Nähe einer tangentialen Linie (TL2) liegt, die das Treibrad (5) und die Tragrolle (721) verbindet.

3. Raupenkettenvorrichtung (1) nach Anspruch 1 oder 2,
wobei die erste Führungsrolle (911) durch den ersten Bügel (912) so befestigt ist, dass ein Abstand (D1) in Richtung der tangentialen Linie (TL1) zwischen dem Außenumfangspunkt (P1) der ersten Führungsrolle (911), an dem die erste Führungsrolle (911) die Raupenkette (6) kontaktiert, und einem Kontaktpunkt (P2) des Leerlauf-Kettensterns (3) auf der tangentialen Linie (TL1), die den Leerlauf-Kettenstern (3) und die Führungsrolle (711) verbindet, 1,5 bis 2,0 mal so lang wie ein Verbindungsabstand (Lp) der Vielzahl der Raupenglieder (61) ist, und
wobei die zweite Führungsrolle (921) durch den zweiten Bügel (922) so befestigt ist, dass ein Abstand (D2) in Richtung der tangentialen Linie (TL2) zwischen dem Außenumfangspunkt (P3) der zweiten Führungsrolle (921), an dem die zweite Führungsrolle (921) die Raupenkette (6) kontaktiert, und einem Kontaktpunkt (P4) des Treibrads (5) auf der tangentialen Linie (TL2), die das Treibrad (5) und die Führungsrolle (721) verbindet, 1,5 bis 2,0 mal so lang wie der Verbindungsabstand (Lp) ist.

## Revendications

1. Engin mobile à chenilles (1) comprenant :
une poutre de chenille (2) constituant un châssis d'un mécanisme d'entraînement d'un corps de véhicule ;
un rouleau tendeur (3) agencé sur une extrémité de la poutre de chenille (2) ;
une roue d'entraînement (5) agencée de manière adjacente à l'autre l'extrémité de la poutre de chenille (2) ;
une chenille (6) comprenant une pluralité de maillons de chenille (61) raccordés sans fin les uns par rapport aux autres, la chenille étant enroulée autour du rouleau de galet tendeur (3) et de la roue d'entraînement (5) ; et
un rouleau porteur (711, 721) en contact avec et faisant rouler la chenille (6) au-dessus de la poutre de chenille (2) pour supporter et guider la chenille (6),
moyennant quoi :
l'engin mobile à chenilles comprend un mécanisme de déplacement de rouleau tendeur monté sur la poutre de chenille (2) pour permettre un déplacement du rouleau tendeur (3) dans une direction de déplacement par rapport à la poutre de chenille (2),
**caractérisé en ce que** l'engin mobile à chenilles (1) comprend en outre :
un premier guide de support (91) et un second guide de support (92), respectivement agencés entre le rouleau tendeur (3) et le rouleau porteur (711) et entre la roue d'entraînement (5) et le rouleau porteur (721), les premier et second guides de support supportant et guidant la chenille (6),
le premier guide de support (91) comprenant : un premier rouleau de guidage (911) ayant un diamètre externe inférieur au diamètre externe du rouleau porteur (711, 721), le premier rouleau de guidage (911) étant en contact avec la chenille (6) à faire rouler ; et une première console (912) à laquelle le premier rouleau de guidage (911) est fixé, sur un support (41) qui supporte de manière rotative le rouleau tendeur (3) ;
un second guide de support (92) comprenant : un second rouleau de guidage (921) ayant un diamètre externe inférieur au diamètre externe du rouleau porteur (711, 721), le second rouleau de guidage (921) étant en contact avec la chenille (6) à faire rouler ; et une seconde console (922) fixant de manière rotative le second rouleau de guidage (921) sur une face supérieure de la poutre de chenille (2).

2. Engin mobile à chenilles (1) selon la revendication 1, dans lequel le premier rouleau de guidage (911) est fixé par la première console (912) de sorte qu'un point circonférentiel externe (P1) du premier rouleau de guidage (911), à l'endroit duquel le premier rouleau de guidage (911) est en contact avec la chenille (6), est situé à proximité d'une ligne tangentielle (TL1) raccordant le rouleau tendeur (3) et le rouleau porteur (711), et
dans lequel le second rouleau de guidage (921) est fixé par la seconde console (922) de sorte qu'un point circonférentiel externe (P3) du second rouleau de guidage (921), à l'endroit duquel le second rouleau de guidage (921) est en contact avec la chenille (6), est situé à proximité d'une ligne tangentielle (TL2) raccordant la roue d'entraînement (5) et le rouleau porteur (721).

3. Engin mobile à chenilles (1) selon la revendication 1 ou 2, dans lequel le premier rouleau de guidage (911) est fixé par la première console (912) de sorte qu'un intervalle (D1) dans la direction de la ligne tangentielle (TL1) entre le point circonférentiel externe (P1) du premier rouleau de guidage (911), à l'endroit duquel le premier rouleau de guidage (911) est en contact avec la chenille (6), et un point de contact (P2) du rouleau tendeur (3) sur la ligne tangentielle (TL1) raccordant le rouleau tendeur (3) et le rouleau porteur (711) est de 1,5 à 2,0 fois aussi long qu'un écartement de maillon (Lp) de la pluralité de maillons de chenille (61), et
dans lequel le second rouleau de guidage (921) est fixé par la seconde console (922) de sorte qu'un intervalle (D2) dans la direction de la ligne tangentielle (TL2) entre le point circonférentiel externe (P3) du second rouleau de guidage (921), à l'endroit duquel le second rouleau de guidage (921) est en contact avec la chenille (6), et un point de contact (P4) de la roue d'entraînement (5) sur la ligne tangentielle (TL2) raccordant la roue d'entraînement (5) et le rouleau porteur (721) est de 1,5 à 2,0 fois aussi long que l'écartement de maillon (Lp).
